# FASCICULE DE BREVET EUROPEEN

(11) **EP 0 709 593 B1**
(45) Date de publication et mention de la délivrance du brevet: **27.05.1998**
(21) Numéro de dépôt: 95402372.7
(22) Date de dépôt: 24.10.1995
(51) Int. Cl.: F16F 13/14

(54) **Perfectionnements aux supports antivibratoires hydrauliques**
Verbesserungen an vibrationsdämpfenden, hydraulischen Stützen
Improvements to antivibrational hydromounts

(30) Priorité: 27.10.1994 FR 9412889
(43) Date de publication de la demande: 01.05.1996
(73) Titulaire: HUTCHINSON, F-75008 Paris (FR)
(72) Inventeur: Bellamy, Alain, F-41100 Naveil (FR); Reh, Denis, F-28200 Chateaudun (FR); Petit, Pascal, F-28200 Chateaudun (FR)
(74) Mandataire: Burbaud, Eric

(56) Documents cités:
- EP-A- 0 012 638
- EP-A- 0 172 700
- EP-A- 0 236 199
- EP-A- 0 556 076
- EP-A- 0 646 735
- DE-A- 3 935 499
- FR-A- 2 622 269
- GB-A- 2 200 190
- GB-A- 2 207 214
- PATENT ABSTRACTS OF JAPAN vol. 8 no. 140 (M-305) [1577] ,29 Juin 1984 & JP-A-59 037348 (TOUKAI GOMU KOGYO K.K.) 29 Février 1984,

## Description

L'invention concerne les supports antivibratoires destinés à être interposés, aux fins d'amortissement et de liaison, entre deux éléments rigides tels qu'un châssis et un moteur de véhicule, pour amortir des mouvements vibratoires entre ces deux éléments rigides, essentiellement selon une direction principale de vibration.

Plus particulièrement, l'invention a pour objet un support antivibratoire de ce type, comportant une première et une deuxième armatures rigides solidarisables respectivement avec les deux éléments rigides à réunir, et un corps en élastomère qui présente une paroi épaisse reliant entre elles les deux armatures rigides et délimitant partiellement une chambre de travail, cette paroi épaisse présentant sensiblement une forme de cloche qui s'étend selon la direction principale de vibration entre d'une part une base périphérique solidaire de la deuxième armature et d'autre part un sommet solidaire de la première armature, ce corps en élastomère comportant en outre une paroi mince librement déformable qui est formée d'une seule pièce avec la paroi épaisse susmentionnée et qui délimite partiellement une chambre de compensation communiquant avec la chambre de travail par un canal étroit, les deux chambres et le canal étroit étant remplis d'un liquide, la deuxième armature étant une plaque de base qui s'étend selon un plan général sensiblement perpendiculaire à la direction principale de vibration et qui présente une face dite de support, solidarisée de façon étanche avec le corps en élastomère pour délimiter avec celui-ci les deux chambres et le canal étroit, la base du corps en élastomère étant formée d'une seule pièce avec une lamelle souple en élastomère qui s'étend à partir de cette base parallèlement à la direction principale de vibration en direction de la plaque de base.

Un tel dispositif est décrit par exemple dans le document EP-A-0 236 199, ce dispositif comportant plusieurs desdites lamelles en élastomère, interposées entre la chambre de travail et la chambre de compensation.

Mais ces lamelles doivent présenter une raideur suffisamment élevée pour limiter leurs débattements.

Par conséquent, les lamelles en élastomère du document susmentionné ne permettent pas de filtrer efficacement les vibrations de faible amplitude et de relativement haute fréquence entre les deux armatures rigides.

La présente invention a notamment pour but de proposer un support antivibratoire hydraulique du genre en question qui présente un clapet de découplage efficace et qui néanmoins reste simple et relativement peu coûteux.

A cet effet, selon l'invention, un support antivibratoire hydraulique du genre en question est caractérisé en ce que la plaque de base comporte un logement en forme de fente qui reçoit la lamelle, ce logement présentant une épaisseur légèrement supérieure à la lamelle et comportant une première et une deuxième faces internes disposées parallèlement à la lamelle et en regard de celle-ci, la première face interne présentant au moins un orifice qui communique avec la chambre de travail et la deuxième face interne comportant au moins un orifice qui communique avec la chambre de compensation, et la lamelle étant adaptée pour obturer l'un ou l'autre de ces orifices en fonction des déplacements de liquide entre la chambre de travail et la chambre de compensation, la lamelle et le logement formant ainsi un clapet de découplage.

Dans des modes de réalisation préférés de l'invention, on a recours en outre à l'une et/ou à l'autre des dispositions suivantes :
- la plaque de base comporte une partie saillante qui s'étend en direction de la première armature parallèlement à la direction principale de vibration, le logement en forme de fente étant formé dans cette partie saillante, et ladite partie saillante formant une cloison entre la chambre de travail et la chambre de compensation ;
- la plaque de base est une pièce moulée ;
- la plaque de base est réalisée en aluminium ;
- la plaque de base est réalisée en matière plastique;
- le canal étroit est constitué par une rainure formée dans la face de support de la plaque de base ;
- la paroi mince du corps en élastomère présente une forme de cloche, les chambres de travail et de compensation étant juxtaposées de façon non concentrique sur la face de support de la plaque de base.

Des avantages de l'invention apparaîtront au cours de la description détaillée suivante d'une de ses formes de réalisation, donnée à titre d'exemple non limitatif, en regard des dessins joints.

Sur les dessins :

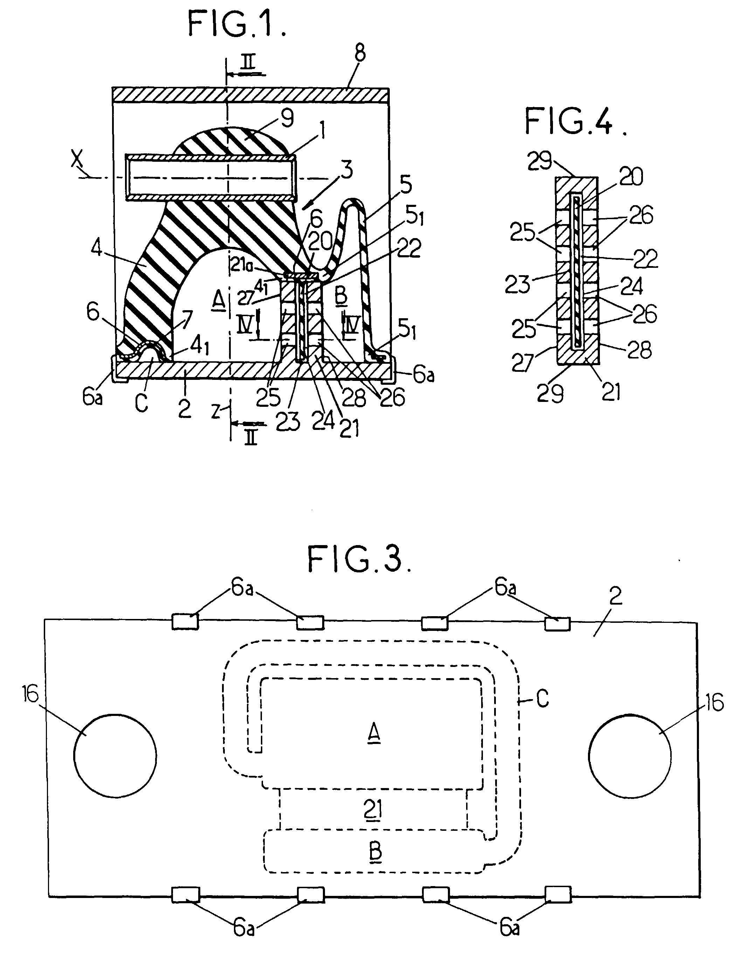

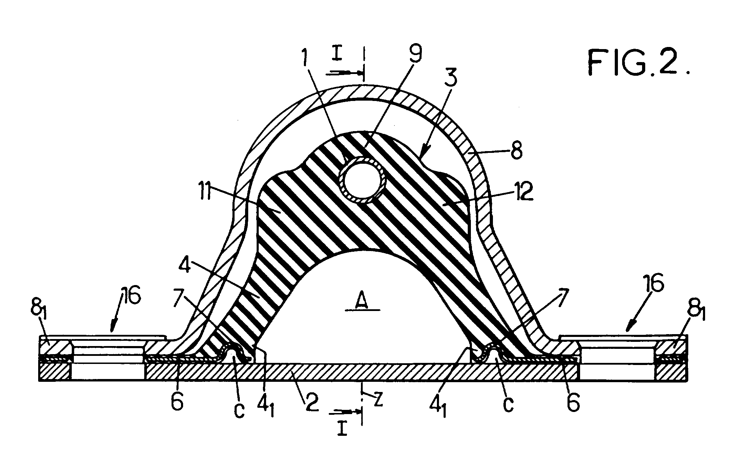

- la figure 1 est une vue en coupe d'une forme de réalisation de l'invention, la coupe étant prise selon la ligne I-I de la figure 2,
- la figure 2 est une vue en coupe selon la ligne II-II de la figure 1,
- la figure 3 est une vue de dessous du dispositif des figures 1 et 2,
- et la figure 4 est une vue de détail en coupe du dispositif de la figure 1, la coupe étant prise selon la ligne IV-IV de la figure 1.

Sur les différentes figures, les mêmes références désignent des éléments identiques ou similaires.

Le support antivibratoire représenté sur les dessins comporte deux armatures métalliques rigides 1 et 2 qui sont reliées entre elles par un corps en élastomère 3.

La première armature 1 est tubulaire dans l'exemple représenté, et présente un axe longitudinal X. De façon plus générale, la première armature 1 peut avoir la forme d'un organe allongé plein ou creux, de section circulaire ou non.

La deuxième armature 2, quant à elle, est une plaque appelée ci-après plaque de base, qui présente une forme générale plane au moins par morceaux, et qui s'étend parallèlement à l'axe X de la première armature.

Le corps en élastomère 3 est solidarisé avec la première armature 1 par vulcanisation. Il comporte une paroi épaisse 4 sensiblement en forme de cloche, qui s'étend depuis un sommet solidaire de la première armature 1 jusqu'à une base périphérique 4₁ solidaire de la plaque de base 2, selon une direction Z dans laquelle on souhaite amortir des mouvements vibratoires entre les deux armatures. La direction Z est perpendiculaire à l'axe X et au plan général de la plaque de base 2, et elle peut être par exemple verticale.

La paroi épaisse 4 présente une résistance à la compression suffisante pour supporter une charge appliquée à la première armature 1 parallèlement à l'axe Z et dirigée vers la plaque de base. Cette charge peut être par exemple supérieure à 15 kg, en général très supérieure.

La base périphérique 4₁ de la paroi épaisse est solidarisée de façon étanche avec la plaque de base 2, en délimitant ainsi une chambre de travail A. Dans l'exemple représenté, la chambre A présente une section horizontale rectangulaire, mais elle pourrait avoir d'autres formes, notamment à section horizontale circulaire ou ovale.

Par ailleurs, le corps en élastomère 3 comporte en outre une paroi mince 5, souple, qui est juxtaposée à la paroi épaisse 4 et formée d'une seule pièce avec celle-ci.

La paroi mince 5 présente une forme de cloche, avec une base périphérique 5₁ qui est solidarisée de façon étanche avec la plaque de base 2, en délimitant ainsi une chambre de compensation B.

Cette chambre B présente une section horizontale rectangulaire dans l'exemple représenté, mais elle pourrait présenter une forme différente.

De préférence, les parois 4 et 5 ne présentent pas de partie commune entre les chambres A et B, en dehors de la liaison entre leurs bases 4₁ et 5₁.

Les deux chambres A et B communiquent par l'intermédiaire d'un canal étroit C, qui a la forme d'une gorge creusée dans la face du corps en élastomère 3 qui est appliquée contre la plaque de base 2, les bords de la gorge étant en contact étanche contre la plaque de base 2.

De plus, dans l'exemple représenté, le corps en élastomère 3 est surmoulé sur une plaque métallique ajourée 6, disposée sur la face du corps en élastomère qui est en contact avec la plaque de base 2. Ainsi, la plaque de base 2 peut être solidarisée avec le corps en élastomère par sertissage de pattes 6a de la plaque ajourée 6 sur la plaque de base 2, ou éventuellement par sertissage de ladite plaque de base 2 sur ladite plaque ajourée 6.

En outre, la plaque ajourée 6 comporte une gorge ou gouttière 7 qui détermine la forme du canal étroit C, avec une grande précision.

Par ailleurs, le support antivibratoire comporte en outre un arceau 8 métallique qui est fixé de façon rigide à la plaque de base 2. L'arceau 8 entoure la première armature 1 et le corps en élastomère 3, et il s'étend parallèlement à l'axe X.

Dans l'exemple représenté, l'arceau 8 est une plaque pliée, qui recouvre la totalité du corps en élastomère, de façon à le protéger contre les chocs de corps extérieurs. Ceci est avantageux dans la mesure où la paroi mince 5 est fragile et exposée à côté de la paroi épaisse 4.

L'arceau 8 comporte deux prolongements latéraux 8₁, respectivement de chaque côté du corps en élastomère 3. Ces prolongements latéraux recouvrent chacun une partie de la plaque ajourée 6, qui elle-même recouvre la deuxième armature. De plus, ces trois éléments sont traversés par un perçage 16 au niveau de chaque prolongement 8₁.

Ces perçages 16 permettent de fixer le support antivibratoire sur une pièce rigide, au moyen de vis ou de boulons (non représentés), en complétant en outre la solidarisation des différentes parties du support antivibratoire par serrage des prolongements 8₁ sur la plaque 6 et la deuxième armature 2.

Pour coopérer avec l'arceau 8, le corps en élastomère 3 comporte un premier bossage 9, qui s'étend parallèlement à la direction Z à partir de la première armature 1, en direction opposée à la plaque de base 2. Ce bossage 9 est adapté à buter contre la partie supérieure de l'arceau 8, en limitant ainsi le déplacement de la première armature en éloignement par rapport à la plaque de base 2.

Le corps en élastomère comporte en outre des bossages latéraux 11, 12 sensiblement diamétralement opposés par rapport à la première armature 1, qui sont adaptés à buter contre l'arceau 8 lorsque la première armature est déplacée sensiblement perpendiculairement à l'axe X et à la direction Z.

Les chambres A et B, ainsi que le canal étroit C, sont remplis de liquide. Lorsque les deux armatures 1 et 2 subissent des mouvements relatifs de vibration, la paroi épaisse 4 du corps en élastomère se déforme, ce qui provoque des variations de volume de la chambre de travail A. Ces variations de volume entraînent des transferts de liquide entre les chambres A et B, par l'intermédiaire du canal étroit C, les variations de volume de la chambre de travail A étant compensées par des variations complémentaires de la chambre de compensation B, dont la paroi mince 5 est facilement déformable.

Au voisinage d'une certaine fréquence, qui est généralement inférieure à 20 hertz et qui dépend essentiellement des dimensions du canal étroit C et de la masse volumique du liquide en mouvement dans ledit canal étroit, il se produit dans le canal étroit C un phénomène de résonance qui, en liaison avec les pertes de charge dans ledit canal étroit, provoque un fort amortissement des vibrations entre les deux armatures 1 et 2.

Par ailleurs, le support antivibratoire comporte un clapet de découplage, destiné à filtrer les vibrations de faible amplitude, par exemple inférieure à 0,5 mm, et de fréquence relativement élevée, par exemple supérieure à 20 hertz.

Ce clapet de découplage est constitué par une lamelle souple 20 qui est formée d'une seule pièce avec la base 4₁ du corps en élastomère 3, cette lamelle 20 étant insérée dans un logement 22 d'une partie saillante 21 de la plaque de base 2.

La partie saillante 21 s'étend parallèlement à la direction principale de vibration Z à partir de la plaque de base 2, en direction de la première armature 1, et elle est solidarisée à la base 4₁ de la paroi épaisse 4, avec étanchéité.

La partie saillante 21 est de préférence formée d'une seule pièce avec la plaque de base, laquelle plaque de base peut alors avantageusement être réalisée en aluminium moulé, ou éventuellement en matière plastique moulée.

Le logement 22 s'étend parallèlement à la direction principale de vibration Z et il débouche à l'extrémité 21a de la partie saillante 21 la plus proche de la première armature 1. Cette extrémité 21a est recouverte par la partie de la base 4₁ qui comporte la lamelle 20, ladite extrémité 21a et ladite partie de la base 4₁ étant solidaires et en contact étanche l'une avec l'autre.

Le logement 22 présente une forme de fente avec deux faces principales internes 23, 24 disposées parallèlement à la lamelle 20 et au voisinage de celle-ci, c'est-à-dire avec un jeu de la lamelle 20 dans le logement 22 qui peut être par exemple de l'ordre de 0,5 mm perpendiculairement au plan de la lamelle 20.

La partie saillante 21 comporte deux faces latérales principales 27, 28 qui sont parallèles à la lamelle 20 et qui sont au contact respectivement de la chambre de travail A et de la chambre de compensation B, et deux faces latérales étroites 29 qui sont en contact étanche avec la base 4₁ de la paroi épaisse du corps en élastomère et solidaires de cette base 4₁.

Les faces 27, 28 sont percées d'orifices, respectivement 25, 26, qui font communiquer respectivement la face interne 23 du logement 22 avec la chambre de travail A et la face interne 24 du logement 22 avec la chambre de compensation B.

Lorsque la première armature 1 ou la plaque de base 2 est soumise à des vibrations de faible amplitude et de relativement haute fréquence, la lamelle 20 est elle-même entraînée en vibration, et ce phénomène suffit pour assurer un effet de filtrage empêchant le transfert des vibrations d'une armature à l'autre.

Lorsque l'amplitude des vibrations imposées à l'une des armatures est suffisamment forte pour que la lamelle 20 vienne en butée contre l'une ou l'autre des faces internes 23, 24 du logement 22, la lamelle 20 obture tour à tour les orifices 25 et 26, de sorte que le liquide est forcé de circuler dans le canal étroit C entre la chambre de travail A et la chambre de compensation B.

On notera que le canal étroit peut éventuellement être réalisé en ménageant une rainure dans la plaque de base 2 lors de son moulage, en remplacement de la gorge décrite ci-dessus formée dans le corps en élastomère.

## Revendications

1. Support antivibratoire hydraulique, destiné à être interposé entre deux éléments rigides pour amortir des vibrations entre ces deux éléments, essentiellement selon une direction principale de vibration (Z), ce support comportant une première (1) et une deuxième (2) armatures rigides, solidarisables respectivement avec les deux éléments rigides à réunir, et un corps en élastomère (3) qui présente une paroi épaisse (4) reliant entre elles les deux armatures rigides (1, 2) et délimitant partiellement une chambre de travail (A), cette paroi épaisse (4) présentant sensiblement une forme de cloche qui s'étend selon la direction principale de vibration (Z) entre d'une part une base périphérique (4₁) solidaire de la deuxième armature (2) et d'autre part un sommet solidaire de la première armature (1), ce corps en élastomère (3) comportant en outre une paroi mince (5) librement déformable qui est formée d'une seule pièce avec la paroi épaisse (4) susmentionnée et qui délimite partiellement une chambre de compensation (B) communiquant avec la chambre de travail (A) par un canal étroit (C), les deux chambres (A, B) et le canal étroit (C) étant remplis d'un liquide, la deuxième armature (2) étant une plaque de base qui s'étend selon un plan général sensiblement perpendiculaire à la direction principale de vibration (Z) et qui présente une face dite de support, solidarisée de façon étanche avec le corps en élastomère pour délimiter avec celui-ci les deux chambres (A, B) et le canal étroit (C), la base (4₁) du corps en élastomère (3) étant formée d'une seule pièce avec une lamelle (20) souple en élastomère qui s'étend à partir de cette base parallèlement à la direction principale de vibration (Z) en direction de la plaque de base (2),
**caractérisé en ce que** la plaque de base (2) comporte un logement (22) en forme de fente qui reçoit la lamelle (20), ce logement (22) présentant une épaisseur légèrement supérieure à la lamelle (20) et comportant une première et une deuxième faces internes (23, 24) disposées parallèlement à la lamelle (20) et en regard de celle-ci, la première face interne présentant au moins un orifice (25) qui communique avec la chambre de travail (A) et la deuxième face interne comportant au moins un orifice (26) qui communique avec la chambre de compensation (B), et la lamelle (20) étant adaptée pour obturer l'un ou l'autre de ces orifices en fonction des déplacements de liquide entre la chambre de travail et la chambre de compensation, la lamelle (20) et le logement (22) formant ainsi un clapet de découplage.

2. Support antivibratoire hydraulique selon la revendication 1, dans lequel la plaque de base (2) comporte une partie saillante (21) qui s'étend en direction de la première armature (1) parallèlement à la direction principale de vibration (Z), le logement (22) en forme de fente étant formé dans cette partie saillante (21), et ladite partie saillante formant une cloison entre la chambre de travail (A) et la chambre de compensation (B).

3. Support antivibratoire hydraulique selon l'une quelconque des revendication 1 et 2, dans lequel la plaque de base est une pièce moulée.

4. Support antivibratoire hydraulique selon la revendication 3, dans lequel la plaque de base (2) est réalisée en aluminium.

5. Support antivibratoire hydraulique selon la revendication 3, dans lequel la plaque de base (2) est réalisée en matière plastique.

6. Support antivibratoire hydraulique selon l'une quelconque des revendications 3 à 5, dans lequel le canal étroit est constitué par une rainure formée dans la face de support de la plaque de base.

7. Support antivibratoire hydraulique selon l'une quelconque des revendications précédentes, dans lequel la paroi mince (5) du corps en élastomère présente une forme de cloche, les chambres de travail (A) et de compensation (B) étant juxtaposées de façon non concentrique sur la face de support de la plaque de base (2).

## Patentansprüche

1. Vibrationsdämpfendes, hydraulisches Lager zum Zwischenschalten zwischen zwei starren Elementen, um Vibrationen zwischen diesen beiden Elementen im wesentlichen entlang einer Vibrations-Hauptrichtung (Z) zu absorbieren, wobei dieses Lager eine erste (1) und eine zweite (2) starre Armatur, die fest mit den beiden starren und zu vereinigenden Elementen verbunden werden können, und einen Elastomerkörper (3) umfaßt, der eine dicke Wand (4) aufweist und mit diesen beiden starren Armaturen (1, 2) verbunden ist und teilweise eine Arbeitskammer (A) begrenzt, wobei diese dicke Wand (4) im wesentlichen eine Glockenform aufweist, die sich entlang der Vibrations-Hauptrichtung (Z) zwischen einerseits einer peripheren, einstückig mit der zweiten Armatur (2) ausgebildeten Basis (4₁) und andererseits einer einstückig mit der ersten Armatur (1) ausgebildeten Spitze erstreckt, wobei dieser Elastomerkörper (3) außerdem eine dünne, frei verformbare Wand (5) umfaßt, die einstückig mit der obengenannten dikken Wand (4) ausgebildet ist und eine Kompensationskammer (B) teilweise begrenzt, die mit der Arbeitskammer (A) durch einen engen Kanal (C) verbunden ist, wobei die beiden Kammern (A, B) und der enge Kanal (C) mit einer Flüssigkeit befüllt sind, wobei die zweite Armatur (2) eine Basisplatte aufweist, die sich bezüglich einer Hauptebene im wesentlichen senkrecht zur Vibrations-Hauptrichtung (Z) erstreckt und eine Stützfläche aufweist, die mit dem Elastomerkörper abdichtend in Verbindung steht, um mit diesem die beiden Kammern (A, B) und den engen Kanal (C) zu begrenzen, wobei die Basis (4₁) des Elastomerkörpers (3) einstückig mit einer flexiblen Lamelle (20) aus Elastomermaterial ausgebildet ist, die sich von dieser Basis aus parallel zur Vibrations-Hauptrichtung (Z) in Richtung der Basisplatte (2) erstreckt, **dadurch gekennzeichnet, daß** die Basisplatte (2) eine Aufnahme (22) in Form eines Schlitzes umfaßt, der die Lamelle (20) aufnimmt, wobei diese Aufnahme etwas dicker als die Lamelle (20) ausgeführt ist und eine erste und eine zweite innere Fläche (23, 24) umfaßt, die parallel zu der Lamelle (20) und gegenüberliegend zu dieser angeordnet ist, wobei die erste innere Fläche wenigstens eine Öffnung (25) aufweist, die mit der Arbeitskammer (A) in Verbindung steht, und die zweite innere Fläche wenigstens eine Öffnung (26) aufweist, die mit der Kompensationskammer (B) in Verbindung steht, und die Lamelle (20) so ausgelegt ist, daß die eine oder die andere dieser Öffhungen in Abhängigkeit der Flüssigkeitsverlagerung zwischen der Arbeitskammer und der Kompensationskammer verschließbar ist, wobei die Lamelle (20) und die Aufnahme (22) auf diese Weise ein Entkopplungsventil bilden.

2. Vibrationsdämpfendes, hydraulisches Lager nach Anspruch 1, in der die Basisplatte (2) ein vorstehendes Teil (21) umfaßt, das sich in Richtung der ersten Armatur (1) parallel zur Vibrations-Hauptrichtung (Z) erstreckt, wobei die Aufnahme (22) in diesem vorstehenden Teil (21) als Schlitz ausgebildet ist, und wobei dieses vorstehende Teil eine Trennwand zwischen der Arbeitskammer (A) und der Kompensationskammer (B) bildet.

3. Vibrationsdämpfendes, hydraulisches Lager nach einem der Ansprüche 1 und 2, in der die Basisplatte ein Formteil ist.

4. Vibrationsdämpfendes, hydraulisches Lager nach Anspruch 3, in der die Basisplatte aus Aluminium ist.

5. Vibrationsdämpfendes, hydraulisches Lager nach Anspruch 3, in der die Basisplatte aus einem Kunststoffmaterial ist.

6. Vibrationsdämpfendes, hydraulisches Lager nach einem der Ansprüche 3 bis 5, in der der enge Kanal durch eine Rille in der Stützfläche der Basisplatte gebildet ist.

7. Vibrationsdämpfendes, hydraulisches Lager nach einem der vorhergehenden Ansprüche, in der die dünne Wand (5) des Elastomerkörpers eine Glockenform aufweist, wobei die Arbeitskammer (A) und die Kompensationskammer (B) nebeneinander auf eine nicht-konzentrische Art über der Stützfläche der Basisplatte (2) angeordnet sind.

## Claims

1. A hydraulic antivibration support for interposing between two rigid elements to damp vibration between the two elements, essentially in a main vibration direction (Z), the support comprising first and second rigid strength members (1, 2) suitable for securing to respective ones of the two rigid elements to be united, and an elastomer body (3) having a thick wall (4) interconnecting the two rigid strength members (1, 2) and partially defining a working chamber (A), said thick wall (4) being substantially bell-shaped, extending along the main vibration direction (Z) between a peripheral base (4₁) secured to the second strength member (2) and a crown secured to the first strength member (1), said elastomer base (3) further including a freely-deformable thin wall (5) which is integrally formed with the above-mentioned thick wall (4) and which partially defines a compensation chamber (B) that is in communication with the working chamber (A) via a narrow channel (C), the two chambers (A, B) and the narrow channel (C) being filled with a liquid, the second strength member (2) being a base plate which extends in a plane that is substantially perpendicular to the main vibration direction (Z) and which has a "support" face secured in sealed manner with the elastomer body to co-operate therewith in defining the two chambers (A, B) and the narrow channel (C), the base (4₁) of the elastomer body (3) being integrally formed with a flexible elastomer tongue (20) which extends from said base parallel to the main vibration direction (Z) towards the base plate (2), characterized in that the base plate (2) includes a slot-shaped housing (22) which receives the tongue (20), the housing (22) being of a width that is slightly greater than the thickness of the tongue (20) and including first and second inside faces (23, 24) disposed parallel to the tongue (20) and facing it, the first inside face having at least one orifice (25) which communicates with the working chamber (A) and
the second inside face including at least one orifice (26) which communicates with the compensation chamber (B), and the tongue (20) being adapted to close one or other of the orifices as a function of liquid displacements between the working chamber and the compensation chamber, the tongue (20) and the housing (22) thus forming a decoupling flap valve.

2. A hydraulic antivibration support according to claim 1, in which the base plate (2) includes a projecting portion (21) which extends towards the first strength member (1) parallel to the main vibration direction (Z), the slot-shaped housing (22) being formed in said projection portion (21), and said projection portion forming a partition between the working chamber (A) and the compensation chamber (B).

3. A hydraulic antivibration support according to claim 1 or 2, in which the base plate is a part made by casting or molding.

4. A hydraulic antivibration support according to claim 3, in which the base plate (2) is made of aluminum.

5. A hydraulic antivibration support according to claim 3, in which the base plate (2) is made of a plastics material.

6. A hydraulic antivibration support according to any one of claims 3 to 5, in which the narrow channel is constituted by a groove formed in the support face of the base plate.

7. A hydraulic antivibration support according to any preceding claim, in which the thin wall (5) of the elastomer body is bell-shaped, the working chamber (A) and the compensation chamber (B) being juxtaposed in non-concentric manner on the support face of the base plate (2).
